Europäisches Patentamt

European Patent Office

Office européen des brevets

(19)

(11) EP 0 901 021 A1

## (12) DEMANDE DE BREVET EUROPEEN

(43) Date de publication:
**10.03.1999 Bulletin 1999/10**

(51) Int Cl.$^6$: **G01S 15/52**

(21) Numéro de dépôt: **98402169.1**

(22) Date de dépôt: **02.09.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **02.09.1997 FR 9710891**

(71) Demandeur: **VALEO ELECTRONIQUE**
**94000 Creteil (FR)**

(72) Inventeur: **Dauphin, Paul-Frédéric**
**94017 Creteil (FR)**

(74) Mandataire: **Le Forestier, Eric et al**
**Cabinet Regimbeau,**
**26, avenue Kléber**
**75116 Paris (FR)**

(54) **Procédé et dispositif pour la détection d'intrusion par émission et réception d'ondes ultrasonores dans un véhicule automobile**

(57)    Selon le procédé, on démodule en quadrature le signal reçu en le mélangeant à deux signaux déphasés de π/2 et de même fréquence que la porteuse d'émission, on compare à un seuil respectif la valeur absolue de chacun des signaux démodulés de chaque couple de signaux obtenu, pour déterminer des couples valides lorsque la valeur absolue d'au moins l'un des deux signaux démodulés est supérieure au seuil, et des couples invalides sinon, et on met en oeuvre un comptage du nombre de rotations successives d'un vecteur dont les coordonnées correspondent aux valeurs des signaux des couples valides successifs.

Pour chaque couple invalide, on diminue progressivement la valeur du compte.

On déclenche l'alarme lorsque la valeur du compte atteint un seuil donné.

FIG.1

Printed by Jouve, 75001 PARIS (FR)

## Description

La présente invention est relative à la détection d'intrusion par émission et réception d'ondes ultrasonores dans un véhicule automobile.

Classiquement, avec les techniques de détection par ultrasons, le véhicule est le siège d'un champ d'ondes ultrasonores combinaison des ondes émises et réfléchies en son intérieur. Ce champ est stationnaire ou quasi stationnaire lorsque l'environnement du véhicule est calme ou à tout le moins n'est pas le siège de modifications importantes.

La détection d'un mouvement se fait généralement en démodulant en amplitude ou en phase l'onde ultrasonore reçue au niveau du récepteur, puis en analysant l'onde démodulée en fonction de plusieurs critères cumulatifs, tels que l'amplitude, la durée et la fréquence du signal détecté.

Par exemple, on peut considérer qu'une intrusion se caractérise par la présence d'un niveau de signal supérieur à un seuil donné pour des fréquences inférieures à 8 Hz (fréquences basses) ou pour des fréquences comprises entre 10 et 20 Hz (fréquences hautes).

Toutefois, ces techniques de détection d'intrusion ne permettent pas d'éviter totalement les risques de fausses alarmes.

Notamment, les chocs thermiques que peut subir le véhicule se traduisent par des basses fréquences sur le signal démodulé et sont susceptibles d'être confondus avec des intrusions. De même, des chocs sur la toiture du véhicule ou sur les vitres de celui-ci se traduisent sur le signal analysé par des modulations hautes fréquences et peuvent par conséquent également être confondus à tort avec des intrusions.

Par ailleurs, un autre problème important rencontré avec les techniques mettant en oeuvre des démodulations d'amplitude tient à ce qu'elles obligent à disposer d'un gain variable étant donné que le signal est dépendant du niveau de la porteuse et que si celle-ci est saturée, il y a perte d'informations.

On connaît certes par le document DE 38 11 113 A un procédé et un dispositif de détection dans lesquels on effectue une détection d'ondes ultrasonores reçues par démodulation en quadrature et analyse de la rotation des vecteurs ayant pour composantes les couples de signaux démodulés obtenus.

Toutefois, un tel dispositif est destiné pour l'essentiel à la détection d'intrusions dans les habitations, et ne pourrait pas convenir à l'environnement spécifique d'un véhicule automobile.

En effet, on rencontre dans cet environnement spécifiques différentes sortes de phénomènes qui ne doivent pas être considérés comme des intrusions, et notamment :

- des chocs légers, isolés ou répétés, sur différents endroits de la carrosserie ou des vitres du véhicule,

- des vibrations peu importantes, mais prolongées, dues par exemple à la mise en route de la ventilation ou du système d'air conditionné à l'arrêt du véhicule,

- la présence d'insectes dans l'habitacle,

- des chocs thermiques auxquels le véhicule est exposé.

Ces phénomènes se caractérisent par des ondes reçues de caractéristiques très diverses, et un but principal de l'invention est de proposer une détection d'intrusion par émission et réception d'ondes ultrasonores dans un véhicule automobile, qui soit capable d'effectuer une bonne discrimination entre des phénomènes de ce genre et de véritables intrusions dans le véhicule, ceci afin de minimiser le risque de fausses alarmes.

L'invention propose à cet effet un procédé pour la détection d'une intrusion dans un véhicule automobile dans lequel on émet des ondes ultrasonores a l'intérieur du véhicule et on reçoit en un point à l'intérieur du véhicule un signal qui est la combinaison des ondes émises et réfléchies dans ledit véhicule, caractérisé par les étapes suivantes :

on démodule en quadrature le signal reçu en le mélangeant à deux signaux déphasés de $\pi/2$ et de même fréquence que la porteuse des ondes ultrasonores émises, pour obtenir un couple de signaux démodulés,

on compare à une valeur de seuil respective la valeur absolue de chacun des signaux démodulés de chaque couple de signaux obtenu, pour déterminer des couples de signaux valides lorsque la valeur absolue d'au moins l'un des deux signaux démodulés est supérieure à la valeur de seuil respective, et des couples invalides dans le cas contraire,

on met en oeuvre un traitement de comptage du nombre de rotations successives d'un vecteur dont les coordonnées correspondent aux valeurs des signaux des couples valides successifs,

pour chaque couple invalide, on diminue progressivement la valeur du compte du nombre de rotations, et

on commande l'émission d'une alarme lorsque la valeur du compte du nombre de rotations atteint un seuil donné.

Ce procédé est avantageusement complété par les différentes caractéristiques suivantes prises seules ou selon toutes leurs combinaisons techniquement possibles :

- on diminue la valeur du compte du nombre de rotations en multipliant cette valeur par un coefficient compris entre 0 et 1.

- on choisit la valeur du coefficient multiplicateur en fonction du degré d'immunité aux bruits recherché.

- on met en oeuvre un traitement de comptage bidirectionnel, en fonction du sens de rotation du vecteur, et on commande l'émission d'une alarme lorsque la valeur absolue du compte du nombre de rotations atteint un seuil donné.
- les signaux démodulés sont échantillonnés et convertis en valeurs numériques, on définit dans le plan de rotation du vecteur une pluralité de quadrants identiques et on incrémente positivement ou négativement un compteur lorsque le vecteur dont les coordonnées correspondent aux valeurs numériques des signaux démodulés passe d'un quadrant à un autre en tournant respectivement dans un sens ou dans un autre.
- le nombre de quadrants est de huit.
- on met en oeuvre sur les signaux démodulés un filtrage supprimant les variations de signal présentant une fréquence supérieure à la moitié de la fréquence d'échantillonnage.

L'invention concerne également un dispositif pour la détection d'intrusion dans un véhicule automobile comportant des moyens pour l'émission d'ondes ultrasonores, ainsi que des moyens de réception, caractérisé en ce que les moyens de réception comportent des moyens de démodulation pour démoduler en quadrature le signal reçu en mélangeant ledit signal à deux signaux déphasés de $\pi/2$ et de même fréquence que la porteuse des ondes ultrasonores émises, des moyens comparateurs pour comparer à une valeur de seuil respective la valeur absolue de chacun des signaux démodulés de chaque couple de signaux obtenu, et ainsi déterminer des couples de signaux valides lorsque la valeur absolue d'au moins un de leurs deux signaux démodulés est supérieure à la valeur de seuil respective, et des couples invalides dans le cas contraire, des moyens de comptage pour compter le nombre de rotations successives d'un vecteur dont les coordonnées correspondent aux valeurs des signaux des couples valides successifs, des moyens opérant à chaque occurrence d'un couple invalide pour diminuer progressivement la valeur du compte du nombre de rotations, et des moyens pour commander l'émission d'une alarme lorsque la valeur du compte du nombre de rotations atteint un seuil donné.

Des aspects préférés, mais non limitatifs, du dispositif selon l'invention sont les suivants :

- les moyens comparateurs, les moyens de comptage et les moyens de commande comprennent un même microcontrôleur en entrée duquel les signaux démodulés sont échantillonnés convertis en valeurs numériques.
- les moyens pour diminuer la valeur du compte sont des moyens multiplicateurs aptes à multiplier la valeur du compte par un coefficient compris entre 0 et 1.
- le dispositif comprend en outre des moyens temporisateurs pour sélectivement mettre en service pendant une première période prédéterminée au moins les moyens de traitement et de comptage, pour maintenir lesdits moyens en service au delà de ladite première période prédéterminée aussi longtemps qu'ils établissent une variation du compte de rotations, et pour mettre lesdits moyens hors service pendant une seconde période prédéterminée à l'issue de ladite première période prédéterminée si aucune variation de compte n'a été établie pendant ladite première période.
- lesdits moyens de traitement et de comptage sont maintenus en service lorsque le nombre de rotations constaté à l'issue de ladite première période prédéterminée est supérieur à un seuil.

D'autres caractéristiques, buts et avantages de l'invention ressortiront encore de la description qui suit. Cette description est purement illustrative et non limitative. Elle doit être lue en regard des dessins annexés sur lesquels :

- la figure 1 est une représentation schématique d'un dispositif conforme à un mode de réalisation possible de l'invention ;
- la figure 2 est un graphe sur lequel on a représenté une division du plan complexe en huit quadrants, cette division étant utilisée dans le traitement de détection qui est mis en oeuvre par le dispositif de la figure 1 ;
- les figures 3a à 3d sont des graphes sur lesquels on a porté en fonction du temps l'évolution de la valeur d'un compteur qui commande le déclenchement d'une alarme lorsqu'elle est supérieure à un seuil donné respectivement dans le cas de chocs répétés sur les vitres du véhicules, dans le cas de chocs répétés sur son pare-brise, dans le cas où le véhicule subit un choc thermique, et dans le cas d'une intrusion ; et
- la figure 4 est un diagramme temporel de mise en service et hors service du dispositif selon une variante de réalisation de l'invention.

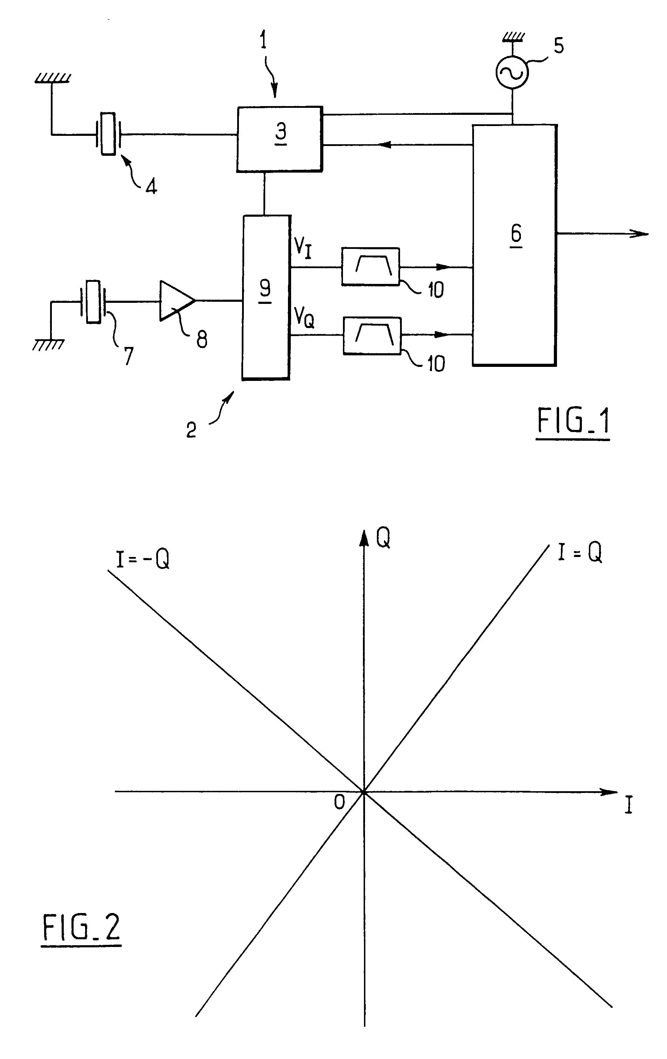

Le dispositif de détection d'intrusion représenté sur la figure 1 comporte des moyens d'émission 1 et des moyens de réception 2.

Les moyens d'émission 1 comportent un circuit 3 pour la génération d'un signal de porteuse et un transducteur 4, par exemple de type piézo-électrique, qui reçoit le signal de tension en sortie du circuit 3 et émet un signal ultrasonore.

La fréquence du signal de porteuse est par exemple de 40 kHz. Ce signal est généré par le circuit 3 à partir d'un signal d'horloge émis par un oscillateur à quartz 5. La fréquence du signal d'horloge est par exemple de 4 MHz, le circuit 3 étant alors constitué par un circuit diviseur de fréquence par 100.

Le circuit 3 de génération de porteuse est en outre commandé par un microcontrôleur 6, utilisant le signal émis par l'oscillateur à quartz 5 comme signal d'horloge.

Les moyens de réception 2 comportent quant à eux un transducteur de réception 7 qui transforme le signal ultrasonore qu'il reçoit en un signal de tension, ainsi qu'un circuit d'amplification 8 interposé entre la sortie du transducteur 7 et l'entrée de moyens 9 pour la démodulation en amplitude du signal en sortie du circuit d'amplification 8.

Ces moyens 9 présentent deux voies de sortie en quadrature VI et VO, dont les signaux respectifs sont obtenus en multipliant le signal en sortie des moyens d'amplification 8 par deux signaux déphasés de $\pi/2$ et de même fréquence que la porteuse.

Chacune des deux voies de traitement $V_I$ et $V_Q$ comporte un filtre 10 de type passe-bande, qui permet d'une part de filtrer les variations lentes des signaux obtenus - qui sont dues à des changements intervenant sur l'environnement du véhicule, tels que par exemple des évolutions de température ambiante dans une même journée - et d'autre part de filtrer les variations de signal qui présentent des fréquences trop importantes pour être susceptibles de correspondre à des intrusions.

Les signaux en sortie de ces deux filtres 10 sont envoyés sur des entrées de conversion analogique/numérique du microcontrôleur 6, où ils sont échantillonnés à une fréquence qui est par exemple de 1 kHz.

Les valeurs absolues des valeurs numériques I et Q obtenues pour chacune des deux voies $V_I$ et $V_Q$ sont comparées à des valeurs de seuil $S_I$ et $S_Q$.

Si au moins l'une de ces valeurs absolues est supérieure à la valeur de seuil respective $S_I$ et $S_Q$, ce qui signifie que le vecteur bi-dimensionnel complexe qui a pour composantes les valeurs numériques I et Q présente une longueur supérieure à une certaine limite, et est représentatif d'un couple valide pour la détection d'intrusions, alors le microcontrôleur 6 met en oeuvre sur le couple de valeurs I et Q un traitement permettant de déterminer la position du vecteur complexe précité par rapport aux huit quadrants du plan complexe qui sont illustrés sur la figure 2 et qui sont définis par les droites :

$$I = 0, I = Q, Q = 0, I = -Q.$$

Ce traitement met en oeuvre une comparaison des valeurs absolues de I et Q entre elles, puis une détermination du quadrant du plan complexe auquel appartient le vecteur de coordonnées (I, Q) en fonction du résultat de cette comparaison et du signe des valeurs prises par I et Q.

Le microcontrôleur 6 comporte un compteur qui est incrémenté positivement ou négativement lorsque le vecteur qui correspond au couple de valeurs (I, Q) passe dans le plan complexe d'un quadrant à un autre en tournant respectivement dans le sens trigonométrique et dans le sens horaire.

La détermination du sens de rotation consiste à choisir celui des deux sens qui correspond dans la représentation complexe à un angle de rotation inférieur à $\pi$ entre le nouveau vecteur valide de coordonnées I, Q et le vecteur valide précédent.

Si au contraire chacune des valeurs numériques I et Q déterminées en entrée du microcontrôleur 6 pour chacune des deux voies $V_I$ et $V_Q$ est inférieure à la valeur seuil $S_r$ et $S_Q$ qui lui correspond, ce qui signifie que le vecteur correspondant est non valide, c'est-à-dire ne doit pas être pris en compte pour l'analyse de la rotation, alors le microcontrôleur effectue dans ce cas une diminution de la valeur du compteur de rotation.

On peut notamment avantageusement multiplier la valeur du compteur par un coefficient k qui est compris entre 0 et 1 et qui peut adopter des valeurs différentes notamment en fonction du type de véhicule et du degré de tolérance souhaité par rapport aux phénomènes parasites.

Par exemple, pour un véhicule de grande taille où l'on souhaite une bonne immunité aux bruits en particulier lorsque les fenêtres sont partiellement ouvertes, le coefficient multiplicateur k peut être de 1/8. Au contraire, dans le cas d'un véhicule plus petit avec une immunité aux bruits inférieure, on peut par exemple choisir k égal à 3/5.

Grâce à ces moyens, on traite la valeur du compteur de façon à ce qu'elle soit ainsi progressivement réinitialisée si les valeurs I et Q prennent plusieurs fois de suite des valeurs proches de 0, lesquelles correspondent a priori à des phénomènes parasites tels que des chocs thermiques ou des vibrations.

Selon une variante, on pourrait également calculer la longueur du vecteur sous la forme $(I^2+Q^2)^{1/2}$ et comparer cette longueur à une valeur de seuil unique.

On notera ici que la discrimination entre vecteurs valides et vecteurs non valides permet avantageusement de diminuer la consommation électrique du microcontrôleur, car pour chaque vecteur non valide, on évite la phase de calculs relativement longue de détermination de l'angle du vecteur et de sa comparaison avec l'angle du vecteur précédent. Cette discrimination permet également de s'affranchir des tolérances propres aux composants du dispositif, et notamment des tolérances du capteur d'ultrasons en matière de gain.

Lorsque la valeur du compteur atteint un seuil S donné, positivement ou négativement, on considère qu'il y a intrusion et le microcontrôleur 6 émet un signal pour la commande de l'émission d'une alarme. On effectue donc la comparaison sur la valeur absolue du compte.

Le seuil S d'émission d'alarme est par exemple égal à 100, ce qui correspond à 12,5 tours successifs du vecteur de coordonnées I, Q, dans un sens ou dans l'autre, dans le plan complexe.

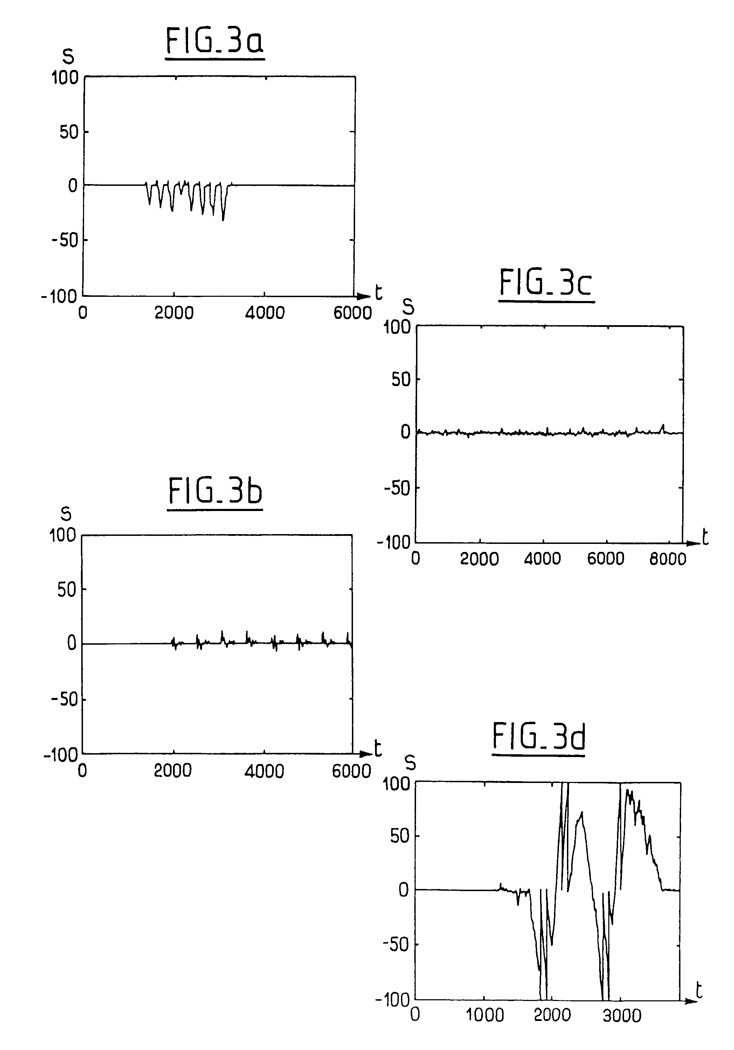

On a illustré sur les figures 3a à 3d des exemples de variations de la valeur du compteur dans différentes situations.

Comme on peut le voir sur ces figures, dans le cas de légers chocs mécaniques sur les vitres ou sur le pare-brise du véhicule (figures 3a, 3b) ou d'un choc thermique (figure 3c), le compteur est régulièrement réinitialisé à 0 de façon progressive et les valeurs maximales qu'il prend sont faibles.

En effet, des vibrations ou un choc thermique engendrent sur le vecteur de coordonnées I, Q des oscillations qui sont désordonnées. Le compteur est donc successivement incrémenté positivement et négativement et ce de façon sensiblement aléatoire. La réinitialisation progressive en cas de successions de vecteurs invalides contribue également au maintien de la valeur du compteur à un niveau bas.

Par contre, un mouvement relativement continu dans le véhicule se traduit sur le vecteur de coordonnées I, Q par des rotations dans un sens qui est fonction du sens du mouvement par rapport au transducteur 7. Par conséquent, dans le cas d'une intrusion (figure 3d), le compteur du microcontrôleur 6 atteint rapidement des valeurs correspondant au seuil de détection S. Et même si le mouvement propre à une intrusion présente une certaine discontinuité, le fait que la réinitialisation du compteur s'effectue de façon progressive entre les différentes phases d'un tel mouvement permet de ne pas complètement réinitialiser le compte de rotations entre ces différentes phases, pour ainsi atteindre de façon plus sûre la valeur de seuil de déclenchement d'un tel compte.

Bien entendu, d'autres valeurs de fréquence d'échantillonnage ou de fréquence de porteuse que celles qui ont été indiquées pour l'exemple qui vient d'être décrit peuvent être choisies.

On notera que le choix des fréquences de porteuse et d'échantillonnage est lié à la valeur maximale de vitesse d'intrusion que l'on souhaite pouvoir détecter.

On sait en effet que la fréquence fm de la modulation du signal reçu sur le transducteur 7 vérifie :

$$v = c - c.fp/ (fp+fm)$$

où v est la vitesse d'intrusion, c la vitesse de propagation du son dans l'air (environ 340 m/s), fp la fréquence de la porteuse.

Or, une détection correcte du sens de rotation ne peut se faire que si d'un échantillonnage a l'autre, la rotation du vecteur de coordonnées (I, Q) est inférieure à un demi tour.

Pour une fréquence d'échantillonnage de 1 KHz, la fréquence maximale du signal modulé doit donc être inférieure à 500 Hz, ce qui correspond à une vitesse d'intrusion maximale détectable de 3,7 m/s.

Les filtres 10 sont adaptés à la fréquence d'échantillonnage. Avec les valeurs précitées pour la fréquence de porteuse et la fréquence d'échantillonnage, ces filtres 10 sont choisis de façon à supprimer les signaux de fréquences supérieures à 500 Hz.

Egalement, en fonction de la sensibilité souhaitée pour le dispositif, d'autres valeurs que la valeur 100 peuvent être envisagées pour le seuil S, notamment si l'on souhaite pouvoir détecter des chocs répétés sur les vitres du véhicule. De même, on peut jouer sur les valeurs de seuil $S_r$ et $S_Q$.

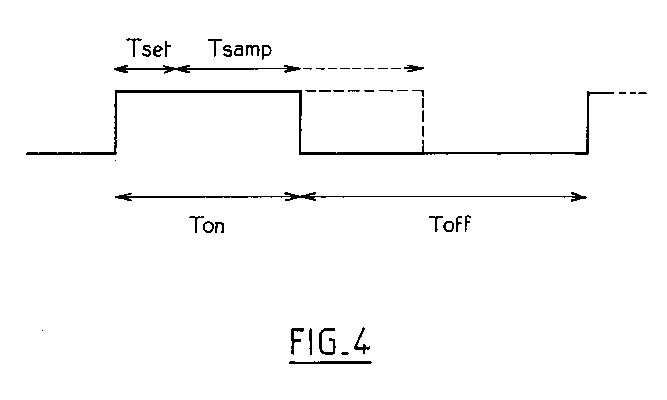

Maintenant en référence à la figure 4, on va décrire une caractéristique auxiliaire du dispositif de détection selon l'invention, ayant pour objet premier de réduire sa consommation électrique, et donc de permettre au dispositif d'être mis en oeuvre pendant des périodes prolongées de non-utilisation du véhicule sans risquer de décharger complètement la batterie de celui-ci.

Selon cette caractéristique, un moyen temporisateur commande une entrée d'activation/désactivation du microcontrôleur 6 (telle qu'une borne de réveil), ou le cas échéant l'ensemble de l'alimentation électrique du dispositif à l'exception de celle du temporisateur lui-même, de manière à ce que le dispositif soit opérationnel pendant une première période de temps prédéterminée, notée Ton.

Pendant cette période, une première phase Tset est dédiée à l'initialisation des différents circuits, et à l'issue de celle-ci, pendant une phase notée Tsamp, le microcontrôleur opère comme décrit précédemment. Si à l'issue de cette phase aucune variation du compte de rotations n'a été établie, alors le dispositif est désactivé pendant une seconde période prédéterminée, notée Toff, qui est avantageusement plus longue que la période Ton.

Si maintenant pendant la phase Tsamp des variations du compte de rotations existent, ce qui signifie qu'une intrusion est peut être en cours de détection, alors cette période Tsamp est prolongée aussi longtemps que de telles variations existent, c'est-à-dire jusqu'à ce que la valeur du compte soit progressivement ramenée à zéro par une succession de vecteurs non valides. La période d'inactivité Toff est alors déclenchée.

De préférence, l'existence de variations du compte de rotations au cours de la phase Tsamp est déterminée en comparant le nombre de rotations constaté à un seuil donné, inférieur au seuil de détection d'intrusions, et en prolongeant ladite phase Tsamp si le nombre de rotations, à l'issue de la durée normale de cette phase, est supérieur à ce seuil.

L'invention a été ici décrite dans le cas d'une mise en oeuvre par des moyens numériques, mais pourrait bien entendu également être mise en oeuvre par des moyens analogiques.

## Revendications

1. Procédé pour la détection d'une intrusion dans un véhicule automobile dans lequel on émet des ondes ultrasonores a l'intérieur du véhicule et on reçoit en un point à l'intérieur du véhicule un signal qui est la combinaison des ondes émises et réfléchies dans ledit véhicule, caractérisé par les étapes suivantes :

on démodule en quadrature le signal reçu en le mélangeant à deux signaux déphasés de π/2 et de même fréquence que la porteuse des ondes ultrasonores émises, pour obtenir un couple de signaux démodulés,

on compare à une valeur de seuil respective la valeur absolue de chacun des signaux démodulés de chaque couple de signaux obtenu, pour déterminer des couples de signaux valides lorsque la valeur absolue d'au moins l'un des deux signaux démodulés est supérieure à la valeur de seuil respective, et des couples invalides dans le cas contraire,

on met en oeuvre un traitement de comptage du nombre de rotations successives d'un vecteur dont les coordonnées correspondent aux valeurs des signaux des couples valides successifs,

pour chaque couple invalide, on diminue progressivement la valeur du compte du nombre de rotations, et

on commande l'émission d'une alarme lorsque la valeur du compte du nombre de rotations atteint un seuil donné.

2. Procédé selon la revendication 1, caractérisé en ce qu'on diminue la valeur du compte du nombre de rotations en multipliant cette valeur par un coefficient (k) compris entre 0 et 1.

3. Procédé selon la revendication 2, caractérisé en ce qu'on choisit la valeur du coefficient multiplicateur (k) en fonction du degré d'immunité aux bruits recherché.

4. Procédé selon l'une des revendications 1 à 3, caractérisé en ce qu'on met en oeuvre un traitement de comptage bidirectionnel, en fonction du sens de rotation du vecteur, et en ce qu'on commande l'émission d'une alarme lorsque la valeur absolue du compte du nombre de rotations atteint un seuil donné.

5. Procédé selon la revendication 4, caractérisé en ce que les signaux démodulés sont échantillonnés et convertis en valeurs numériques, en ce qu'on définit dans le plan de rotation du vecteur une pluralité de quadrants identiques et en ce qu'on incrémente positivement ou négativement un compteur lorsque le vecteur dont les coordonnées correspondent aux valeurs numériques des signaux démodulés passe d'un quadrant à un autre en tournant respectivement dans un sens ou dans un autre.

6. Procédé selon la revendication 5, caractérisé en ce que le nombre de quadrants est de huit.

7. Procédé selon l'une des revendications 1 à 6, caractérisé en ce qu'on met en oeuvre sur les signaux démodulés un filtrage supprimant les variations de signal présentant une fréquence supérieure à la moitié de la fréquence d'échantillonnage.

8. Dispositif pour la détection d'intrusion dans un véhicule automobile comportant des moyens (1) pour l'émission d'ondes ultrasonores, ainsi que des moyens de réception (2), caractérisé en ce que les moyens de réception (2) comportent des moyens de démodulation (9) pour démoduler en quadrature le signal reçu en mélangeant ledit signal à deux signaux déphasés de π/2 et de même fréquence que la porteuse des ondes ultrasonores émises, des moyens comparateurs (6) pour comparer à une valeur de seuil respective la valeur absolue de chacun des signaux démodulés de chaque couple de signaux obtenu, et ainsi déterminer des couples de signaux valides lorsque la valeur absolue d'au moins un de leurs deux signaux démodulés est supérieure à la valeur de seuil respective, et des couples invalides dans le cas contraire, des moyens de traitement et de comptage (6) pour compter le nombre de rotations successives d'un vecteur dont les coordonnées correspondent aux valeurs des signaux des couples valides successifs, des moyens (6) opérant à chaque occurrence d'un couple invalide pour diminuer progressivement la valeur du compte du nombre de rotations, et des moyens (6) pour commander l'émission d'une alarme lorsque la valeur du compte du nombre de rotations atteint un seuil donné.

9. Dispositif selon la revendication 8, caractérisé en ce que les moyens comparateurs, les moyens de traitement et de comptage et les moyens de commande comprennent un même microcontrôleur (6) en entrée duquel les signaux démodulés sont échantillonnés convertis en valeurs numériques.

10. Dispositif selon l'une des revendications 8 et 9, caractérisé en ce que les moyens pour diminuer la valeur du compte sont des moyens multiplicateurs (6) aptes à multiplier la valeur du compte par un coefficient compris entre 0 et 1.

11. Dispositif selon l'une des revendications 8 à 10, caractérisé en ce qu'il comprend en outre des moyens temporisateurs pour sélectivement mettre en service pendant une première période prédéterminée au moins les moyens de traitement et de comptage, pour maintenir lesdits moyens en service au delà de ladite première période prédéterminée aussi longtemps qu'ils établissent une variation du compte de rotations, et pour mettre lesdits moyens hors service pendant une seconde période prédéterminée à l'issue de ladite première période prédéterminée si aucune variation de compte n'a été établie pendant ladite première période.

12. Dispositif selon la revendication 11, caractérisé en ce que lesdits moyens de traitement et de comptage sont maintenus en service lorsque le nombre de rotations constaté à l'issue de ladite première période prédéterminée est supérieur à un seuil.

FIG_1

FIG_2

FIG.3a

FIG.3b

FIG.3c

FIG.3d

FIG_4

**Office européen des brevets**

## RAPPORT DE RECHERCHE EUROPEENNE

Numéro de la demande

EP 98 40 2169

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 38 11 113 A (MATSUSHITA ELECTRIC WORKS) 20 octobre 1988 * le document en entier * | 1-12 | G01S15/52 |
| X | US 3 733 581 A (H. P. KALMUS) 15 mai 1973 * le document en entier * | 1-12 | |
| A | EP 0 654 768 A (VALEO ELECTRONIQUE) 24 mai 1995 * colonne 3, ligne 57 - colonne 4, ligne 52; figure 2 * | 1,9 | |

| | DOMAINES TECHNIQUES RECHERCHES (Int.Cl.6) |
|---|---|
| | G01S G08B B60R |

Le présent rapport a été établi pour toutes les revendications

| Lieu de la recherche | Date d'achèvement de la recherche | Examinateur |
|---|---|---|
| LA HAYE | 20 novembre 1998 | Sgura, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)